# EUROPÄISCHE PATENTANMELDUNG

(11) **EP 1 612 445 A1**
(43) Veröffentlichungstag der Anmeldung: **04.01.2006**
(21) Anmeldenummer: 05012587.1
(22) Anmeldetag: 11.06.2005
(51) Int. Cl.: F16D 48/06, F16D 25/12

(54) **Verfahren zur Steuerung des Ausgleichs hydraulischer Strecken**

(30) Priorität: 30.06.2004 DE 102004031478
(71) Anmelder: LuK Lamellen und Kupplungsbau Beteiligungs KG, 77813 Bühl (DE)
(72) Erfinder: Eggert, Thomas, Dr., 76131 Karlsruhe (DE); Jung, Mario, 76547 Sinzheim (DE); Moosheimer, Johannes, Dr., 77815 Bühl (DE); Werner, Olaf, Dr., 77815 Bühl (DE)

(57) **Zusammenfassung**

Ein Verfahren zur Steuerung des Ausgleichs hydraulischer Strecken von Fahrzeugen, bei denen der Ausgleich durch Überstreichen einer Öffnung der hydraulischen Strecke zu einem Ausgleichsbehälter mit einem Kolbenelement und durch Öffnen der hydraulischen Strecke zu dem Ausgleichsbehälter erfolgt, enthält: Ermitteln einer momentanen Schnüffeldringlichkeit; Vergleich der momentanen Schnüffeldringlichkeit mit einer tolerierbaren Fahrkomforteinbuße; und Durchführen eines Ausgleichs, wenn die momentane Schnüffeldringlichkeit die tolerierbare Komforteinbuße übersteigt.

## Beschreibung

Die Erfindung betrifft ein Verfahren zur Steuerung des Ausgleichs hydraulischer Strecken, insbesondere von Fahrzeugen.

Bei hydraulischen Strecken, die beispielsweise einen Geberzylinder, einen Nehmerzylinder und eine diese Zylinder verbindende Leitung enthalten, muss ein Ausgleich von Volumenänderungen des Hydraulikfluids vorgenommen werden, um sicherzustellen, dass das in der Strecke vorhandene Hydraulikfluidvolumen konstant gehalten wird bzw. z.B. an Verschleiß oder Wärmedehnungen der Bauteile angepasst wird, so dass die Ausgangsposition des Stellglieds genau justiert bleibt und das mittels der hydraulischen Strecke betätigte Stellglied definierte Wege aus einer Ausgangsposition zurücklegt.

Der Ausgleich der beispielsweise durch Temperaturänderungen hervorgerufenen Volumenschwankungen erfolgt dadurch, dass die hydraulische Strecke, vorzugsweise im Bereich des Geberzylinders, eine Öffnung zu einem Ausgleichsbehälter aufweist, die von Zeit zu Zeit von einem Kolbenelement überstrichen wird und dadurch zur hydraulischen Strecke geöffnet wird. Bei geöffneter Verbindung zum Ausgleichsbehälter gleicht sich das Hydraulikfluidvolumen auf einen definierten Wert aus. Dieser Vorgang wird mit Schnüffeln bezeichnet.

Ein Anwendungsgebiet für solche Anordnungen aus Geberzylinder, Nehmerzylinder und dazwischen liegender Verbindungsleitung ist z.B. ein Kupplungsstellglied, mit dem die Anpresskraft der Kupplung sichergestellt wird. Verändert sich das Volumen des Hydraulikfluids, ist der Schlupf der Kupplung nicht mehr definiert einstellbar. Daher muss von Zeit zu Zeit ein Schnüffeln gewährleistet werden und somit das Volumen des Hydraulikfluids in der hydraulischen Strecke nachjustiert werden.

Ein Schnüffelzyklus ist beispielsweise aus der DE 197 34 038 A1 bekannt. Beim Durchführen eines Schnüffelzyklus wird der Kolben des Geberzylinders in einen Bereich gefahren, der einem ersten Todpunkt nahe ist. Dabei überstreicht der Kolben die Schnüffelbohrung, die eine Verbindung zum Ausgleichsbehälter herstellt, so dass das ganze System drucklos wird bzw. Umgebungsdruck annimmt. Der Kolben des Nehmerzylinders befindet sich in diesem Zustand in einer Position, die der vollständig geschlossenen Kupplung entspricht. Sobald der Kolben des Geberzylinders dabei den Bereich, der die Schnüffelbohrung schließt, erreicht, beginnt ein Volumenausgleich und ein Zuviel oder Zuwenig an Flüssigkeitsvolumen wird ausgeglichen. Nach einer entsprechenden Ausgleichszeit befindet sich ein ganz exakt definiertes Flüssigkeitsvolumen innerhalb des Systemabschnitts, mittels dessen der Systemdruck in Abhängigkeit von der Kolbenposition des Geberzylinders und der Gegenkraft, die auf den Kolben des Nehmerzylinders wirkt, justiert werden kann. Anschließend wird der Kolben des Geberzylinders in seine Arbeitsposition zurückbewegt, wobei ein Druckaufbau im System beginnt, sobald er die Verbindung zwischen Ausgleichsbehälter und Hydraulikstrecke über die Schnüffelbohrung trennt. Der Schnüffelzyklus wird in einem bestimmten, festen Zeitraster wiederholt, wobei als Zeitablauf für die Wiederholung des Schnüffelzyklus 20 bis 180 Sekunden, bevorzugt 40 bis 90 Sekunden erwähnt sind.

Insbesondere bei hydraulisch aufzudrückenden Kupplungen mit Schlupfregelung, aber auch bei hydraulisch zuzudrückenden Kupplungen, wird beim Ausführen eines Schnüffelzyklus die Schwingungsisolation der Schlupfregelung unterbrochen, d.h. die durch das Schleifen der Kupplung erreichte Dämpfung beeinträchtigt, was zu merklichen Komforteinbußen führen kann.

Davon ausgehend ist es die Aufgabe der Erfindung, ein regelmäßiges Schnüffeln zu gewährleisten und dabei die Komfortbeeinträchtigung so gering wie möglich zu halten.

Diese Aufgabe wird mit einem Verfahren zur Steuerung des Ausgleichs hydraulischer Strecken mit den Merkmalen des Anspruchs 1 gelöst. Bevorzugte Ausführungsformen sind durch die abhängigen Ansprüche angegeben.

Das Verfahren zur Steuerung des Ausgleichs hydraulischer Strecken von Fahrzeugen, bei dem der Ausgleich durch Überstreichen einer Öffnung der hydraulischen Strecke zu einem Ausgleichsbehälter mit einem Kolbenelement und durch Öffnen der hydraulischen Strecke zu dem Ausgleichsbehälter erfolgt, enthält: Ermitteln einer momentanen Schnüffeldringlichkeit; Vergleich der momentanen Schnüffeldringlichkeit mit einer tolerierbaren Fahrkomforteinbuße; und Durchführen eines Ausgleichs, wenn die momentane Schnüffeldringlichkeit die tolerierbare Komforteinbuße übersteigt.

Bevorzugter Weise wird vor dem Ausführen des Verfahrens festgestellt, ob ein Ausgleich der hydraulischen Strecke ohne Beeinträchtigung des Fahrkomforts möglich ist, und die genannten Schritte werden nur durchgeführt, wenn festgestellt wird, dass ein Ausgleich nicht ohne Beeinträchtigung des Fahrkomforts möglich ist. Andernfalls erfolgt ein Ausgleich nach einer bestimmten Schnüffeltaktzeit t1.

Vorzugsweise werden, wenn festgestellt wird, dass ein Ausgleich nicht ohne Beeinträchtigung des Fahrkomforts möglich ist, die genannten Schritte nach Ablauf einer festgelegten Wartezeit t2 durchgeführt.

Vorteilhafter Weise ist die Schnüffeldringlichkeit zeitlich anwachsend.

Nach einer bevorzugten Ausführungsform ist die hydraulische Strecke eine hydraulische Strecke einer hydraulisch aufzudrückenden Kupplung.

Vorteilhafter Weise werden die genannten Schritte durchgeführt, wenn eine Schlupfregelung für die Kupplung aktiv ist oder der Schlupf nicht ohne Komfortverlust abgebaut werden kann.

Vorzugsweise ist die Schnüffeldringlichkeit von mindestens einem der folgenden Parameter abhängig: Einer seit dem letzten Ausgleich abgelaufenen Zeit t3, Getriebe- und/oder Kupplungstemperatur Veränderungen seit dem letzten Ausgleich und/oder einer Abweichung der aktuell adaptierten Kupplungskennlinie von der Kennlinie unmittelbar nach dem Ausgleich.

Nach einer vorteilhaften Ausführungsform wird die tolerierbare Komforteinbuße in Abhängigkeit von der Fahrsituation bestimmt.

Vorzugsweise wird für die Festlegung der Fahrsituation die Motordrehzahl und/oder das Motormoment und/oder der Zielschlupf berücksichtigt.

Der Erfindung liegt der Gedanke zu Grunde, dass ein rein zeitlich gesteuertes Schnüffeln, d.h. ein Schnüffeln nach Ablauf einer Schnüffeltaktzeit t1 nach dem letzten Schnüffeln bzw. Systemstart, nur dann durchgeführt wird, wenn der Schlupf ohne Komfortverlust abgebaut werden kann bzw. die Schlupfregelung nicht aktiv ist. Andernfalls wird eine Abwägung getroffen, ob das Schnüffeln mit einhergehenden Komforteinbußen in der vorliegenden Fahrsituation durchgeführt werden soll oder nicht. Somit wird abgewogen, ob z.B. zunehmender Schlupf einer Kupplung, hervorgerufen durch ungenaue Justierung des Hydraulikfluidvolumens, tolerierbar ist oder ob eine vorübergehende Komfortbeeinträchtigung in Kauf genommen wird.

Wenngleich in der vorliegenden Beschreibung stets vom Beispiel einer Schnüffellogik bei Schlupfregelungen für Kupplungen an Fahrzeugen ausgegangen wird, so ist die Erfindung grundsätzlich auch für andere Hydraulikstrecken anwendbar, bei denen eine Abwägung zu treffen ist, ob ein Schnüffelzyklus trotz Komfortbeeinträchtigung durchzuführen ist oder mit dem Schnüffelzyklus abzuwarten ist, und eine vorübergehende ungenaue Justierung des Hydraulikvolumens hinzunehmen ist.

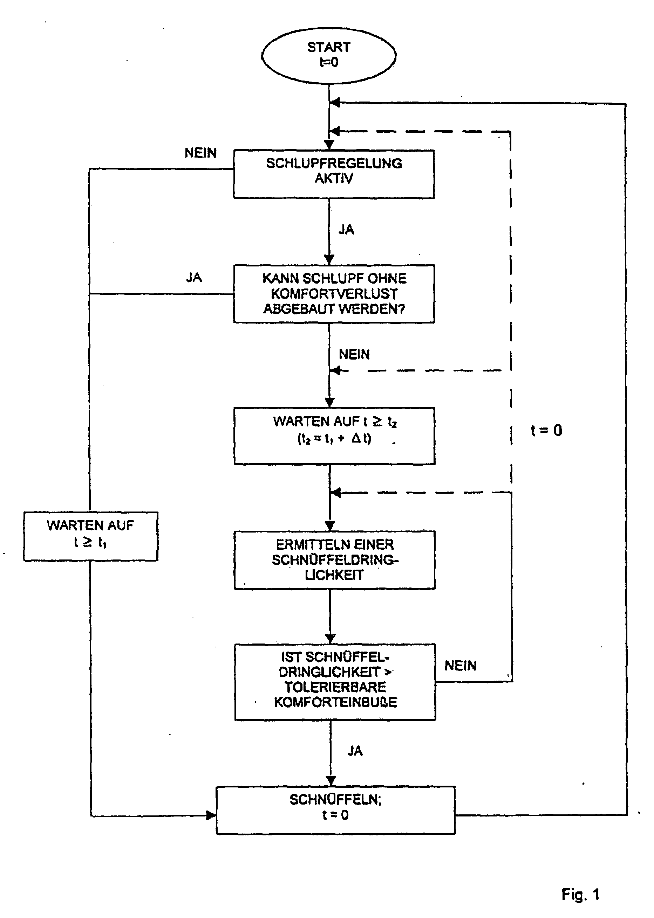

Die beigefügte Figur zeigt ein Flussdiagramm, das den Verfahrensablauf zur Bestimmung des Schnüffelzeitpunkts darstellt.

Beispielhaft wird eine Ausführungsform der Erfindung nachfolgend beschrieben. Dazu wird auf eine hydraulisch aufzudrückende Kupplung Bezug genommen, die eine hydraulische Stecke aufweist, welche einen Geberzylinder, einen Nehmerzylinder und eine Verbindungsleitung zwischen Geber- und Nehmerzylinder enthält. Der im Geberzylinder verschiebbare Kolben wirkt auf einen Kupplungsausrücker ein, der zum Öffnen der Kupplung z.B. einer Druckfeder entgegenwirkt. Der Schlupf wird über die Anpresskraft der Kupplung gesteuert.

Zu Beginn des Zyklus wird bestimmt, ob die Schlupfregelung aktiv ist und ob der Schlupf ohne Komfortverlust, der beispielsweise durch ein Unterbrechen der Schwingungsisolation der Schlupfregelung bewirkt wird, abgebaut werden kann. Wenn dies der Fall ist oder wenn die Schlupfregelung nicht aktiv ist, wird der Schnüffelzeitpunkt anhand eines vorbestimmten Zeitablaufs bestimmt. Beispielsweise ist ein Schnüffelintervall von t1=60 Sekunden möglich. Dabei wird in den genannten Fahrsituationen ohne Ermitteln einer Dringlichkeit, d.h. nur abhängig vom Ablauf der Schnüffeltaktzeit t1 seit dem letzten Schnüffeln, geschnüffelt. Somit wird in solchen Situationen ohne Komfortbeeinträchtigung eine Justierung der Hydraulikstrecke bevorzugt vorgenommen, wodurch mehr Zeit bis zum nächsten unbedingt erforderlichen Schnüffeln, z.B. wegen fehlender Justiergenauigkeit, zur Verfügung steht. Dies ist vorteilhaft, da im Voraus nicht beurteilt werden kann, ob möglicherweise zu einem späteren Zeitpunkt das Fahrzeug in einem für das Schnüffeln ungünstigeren Fahrzustand ist.

Nach dem Schnüffeln wird ein Zeitzähler zurückgesetzt (t=0) und der Schnüffelzyklus beginnt erneut.

Ist jedoch die Schlupfregelung aktiv und kann der Schlupf nicht ohne Komfortverlust gebaut werden, so wartet der Schnüffelzyklus vorzugsweise darauf, dass die seit dem letzten Schnüffeln abgelaufene Zeit mindestens das Warteintervall t2 beträgt. Dabei ist t2 vorzugsweise größer als t1, beispielsweise t2 gleich 180 Sekunden. Dies bedeutet, dass bei einem komfortbeeinträchtigenden Schlupfabbau die Schnüffelperiodendauer zu Gunsten erhöhten Komforts verlängert wird.

Zum Zeitpunkt t=t2 wird eine Schnüffeldringlichkeit ermittelt. Die Schnüffeldringlichkeit wird beispielsweise in Prozent (0 bis 100 %) angegeben. Sie ist von verschiedenen Parametern abhängig, z. B. einem Zeitintervall t3 (beispielsweise t3=120 Sekunden), nach dessen Ablauf seit dem letzten Ausgleich die Schnüffeldringlichkeit auf 100 % gesetzt wird, und/oder der aktuell verstrichenen Zeit seit dem letzten Schnüffeln, d. h., die Schnüffeldringlichkeit wächst kontinuierlich zeitlich an. Weitere Parameter, die die Schnüffeldringlichkeit beeinflussen können, sind z. B. Temperaturveränderungen seit dem setzten Schnüffeln, z. B. im Getriebe oder in der Kupplung. Alternativ kann auch direkt die Fluidtemperatur des Hydraulikfluids erfasst werden. Bei großen Temperaturänderungen seit dem letzten Schnüffeln wird auf Grund einer damit einhergehenden verhältnismäßig großen Volumenänderung des Hydraulikfluids die Nachjustierung mittels eines Schnüffelzykluses dringender. Alternativ oder zusätzlich kann die aktuelle Kupplungskennlinie ermittelt werden und mit einer Kennlinie unmittelbar nach einem Schnüffeln verglichen werden. Bei großen Abweichungen ist die Dringlichkeit für eine Nachjustierung hoch.

Diese momentane Schnüffeldringlichkeit (zum Zeitpunkt t2) wird anhand einer Skala bewertet (0 bis 100 %). 100 % bedeutet, dass ein Schnüffeln unbedingt und unabhängig von einer eventuellen Komforteinbuße, erforderlich ist, während 0 % bedeutet, dass von einem Schnüffeln in jedem Fall zu Gunsten eines erhöhten Komforts abgesehen werden kann.

Wenn die Schnüffeldringlichkeit ermittelt ist, wird die momentane Schnüffeldringlichkeit zum Zeitpunkt t2 mit einer tolerierbaren Fahrkomforteinbuße verglichen. Die tolerierbare Fahrkomforteinbuße wird ebenfalls auf einer Skala von 0 bis 100 % angegeben und kann unabhängig vom Betriebszustand des Fahrzeugs sein, z.B. stets 50 %. In diesem Fall wird bei momentanen Schnüffeldringlichkeiten über 50% geschnüffelt, bei Schnüffeldringlichkeiten unter 50 % wird vom Schnüffeln abgesehen.

Bevorzugter Weise wird jedoch die tolerierbare Komforteinbuße in Abhängigkeit von der Fahrsituation berechnet. Dabei können beispielsweise die Motordrehzahl, das Motormoment oder der Zielschlupf berücksichtigt werden. In der besonders bevorzugten Ausführungsform ist die tolerierbare Komforteinbuße jedoch anhand eines Kennfelds hinterlegt, beispielsweise wie in Tabelle 1 angegeben.

| | LL-1200 U/min | 1200-2000 U/min | 2000 U/min-Max. |
|---|---|---|---|
| coast | 30 % | 100% | 50 % |
| float | 100 % | 70 % | 30 % |
| creep | 50 % | - | - |
| medium load | 30 % | 80 % | 10 % |
| full load | 80 % | 100% | 10 % |

In die tolerierbare Komforteinbuße geht einerseits die Motordrehzahl n ein, die z. B. in drei Bereiche unterteilt ist: unterkritisch (n=Leerlauf bis 1200 Umdrehungen pro Minute), kritisch (n=1200 bis 2000 Umdrehungen pro Minute) und überkritisch (n=2000 Umdrehungen pro Minute bis Maximaldrehzahl). Außerdem wird der Fahrzustand gekennzeichnet (coast, fload, creep, medium load, full load) und für jede Kombination aus Motordrehzahl und Fahrzustand ein Wert für die tolerierbare Komforteinbuße hinterlegt.

Wenn die momentane Schnüffeldringlichkeit beispielsweise beim Vollastbetrieb (full load) bei einer Motordrehzahl von 1800 Umdrehungen pro Minute weniger als 100 % beträgt, wird nicht geschnüffelt. Im Schubbetrieb (coast) bei niedriger Drehzahl (z. B. 1100 Umdrehungen pro Minute) wird hingegen bereits geschnüffelt, wenn die Dringlichkeit 30 % erreicht, da die hier damit verbundene Fahrkomforteinbuße verhältnismäßig gering ist.

Wird festgestellt, dass die Schnüffeldringlichkeit den für die jeweilige Fahrsituation festgelegten tolerierbaren Fahrkomforteinbußenwert übersteigt, so wird ein Schnüffeln durchgeführt und der Zeitzähler wiederum zurückgesetzt (t=0). Nach dem Schnüffeln beginnt der Schnüffelzyklus erneut.

Wird festgestellt, dass die Schnüffeldringlichkeit noch unter der tolerierbaren Fahrkomforteinbuße liegt, wird kein Schnüffelvorgang durchgeführt, d. h. die momentane Abweichung des Hydraulikfluidvolumens von Sollwert wird akzeptiert, und der Ablauf kehrt in eine Station vor dem Ermitteln der Schnüffeldringlichkeit zurück und wird von dort wiederholt. Ob der Ablauf unmittelbar mit dem Ermitteln einer weiteren Schnüffeldringlichkeit beginnt oder ob eine erneute Wartezeitspanne t2 abgewartet wird, d. h. nach Ablauf eines Schnüffeldringlichkeitszyklus ohne Schnüffeln der Zeitzähler wieder auf Null zurückgesetzt wird, kann nach Bedarf gewählt werden.

Der wesentliche Aspekt der Erfindung liegt darin, dass spürbare Komforteinbußen im Fahrbetrieb mit Schlupfregelung, z.B. bei Parallelschaltgetrieben mit zugedrückter Kupplung vermieden werden können, wenn mit Hilfe eine Dringlichkeit, die mit einer tolerierbaren Komforteinbuße verglichen wird, entschieden wird, wann in den jeweiligen Fahrsituationen geschnüffelt werden darf bzw. muss.

## Patentansprüche

1. Verfahren zur Steuerung des Ausgleichs hydraulischer Strecken von Fahrzeugen, wobei der Ausgleich durch Überstreichen einer Öffnung der hydraulischen Strecke zu einem Ausgleichsbehälter mit einem Kolbenelement und durch Öffnen der hydraulischen Strecke zu dem Ausgleichsbehälter erfolgt, das Verfahren enthaltend:
a. Ermitteln einer momentanen Schnüffeldringlichkeit;
b. Vergleich der momentanen Schnüffeldringlichkeit mit einer tolerierbaren Fahrkomforteinbuße;
c. Durchführung eines Ausgleichs, wenn in Schritt (b) die momentane Schnüffeldringlichkeit die tolerierbare Komforteinbuße übersteigt.

2. Verfahren nach Anspruch 1, **dadurch gekennzeichnet, dass** vor Schritt (a) festgestellt wird, ob ein Ausgleich der hydraulischen Strecke ohne Beeinträchtigung des Fahrkomforts möglich ist;
Schritte (a-c) nur durchgeführt werden, wenn in Schritt (a) festgestellt wird, dass ein Ausgleich nicht ohne Beeinträchtigung des Fahrkomforts möglich ist, und andernfalls ein Ausgleich nach einer bestimmten Schnüffeltaktzeit t₁ erfolgt.

3. Verfahren nach Anspruch 1, **dadurch gekennzeichnet, dass** Schritte (a-c) nach Ablauf einer festgelegten Wartezeit t₂ durchgeführt werden, wenn festgestellt wird, dass ein Ausgleich nicht ohne Beeinträchtigung des Fahrkomforts möglich ist.

4. Verfahren nach einem der vorhergehenden Ansprüche, **dadurch gekennzeichnet, dass** die Schnüffeldringlichkeit zeitlich anwachsend ist.

5. Verfahren nach einem der vorhergehenden Ansprüche, **dadurch gekennzeichnet, dass** die hydraulische Strecke eine hydraulische aufzudrückende Kupplung ist.

6. Verfahren nach Anspruch 5, **dadurch gekennzeichnet, dass** Schritte (a-c) durchgeführt werden, wenn eine Schlupfregelung für die Kupplung aktiv ist und/oder der Schlupf nicht ohne Komfortverlust abgebaut werden kann.

7. Verfahren nach einem der Ansprüche 5 oder 6, **dadurch gekennzeichnet, dass** die Schnüffeldringlichkeit von mindestens einem der Parameter abhängig ist:
einer seit dem letzten Ausgleich abgelaufenen Zeit t₃, Getriebe- und/oder Kupplungs-Temperaturveränderungen seit dem letzten Ausgleich, einer Abweichung der aktuell adaptierten Kupplungskennlinie von der Kennlinie unmittelbar nach dem Ausgleich.

8. Verfahren nach einem der Ansprüche 5 bis 7, **dadurch gekennzeichnet, dass** die tolerierbare Komforteinbuße in Abhängigkeit der Fahrsituation bestimmt wird.

9. Verfahren nach Anspruch 8, **dadurch gekennzeichnet, dass** die Fahrsituation die Motordrehzahl und/oder das Motormoment und/oder den Zielschlupf berücksichtigt.
